# EUROPÄISCHE PATENTSCHRIFT

(11) **EP 1 762 040 B1**
(45) Veröffentlichungstag und Bekanntmachung des Hinweises auf die Patenterteilung: **30.05.2012**
(21) Anmeldenummer: 05759236.2
(22) Anmeldetag: 09.06.2005
(51) Int. Cl.: H04L 12/26

(54) **VERFAHREN UND VORRICHTUNG ZUR STATUSANZEIGE IN EINEM DATENÜBERTRAGUNGSSYSTEM**
METHOD AND DEVICE FOR INDICATING THE STATUS IN A DATA TRANSMISSION NETWORK
PROCEDE ET DISPOSITIF D'AFFICHAGE DE L'ETAT DANS UN SYSTEME DE TRANSMISSION DE DONNEES

(30) Priorität: 14.06.2004 DE 102004029686
(43) Veröffentlichungstag der Anmeldung: 14.03.2007
(73) Patentinhaber: Teles AG Informationstechnologien, 10587 Berlin (DE)
(72) Erfinder: SCHINDLER, Sigram, 14129 Berlin (DE); HESSE, Jan, 10555 Berlin (DE); PAETSCH, Frank, 12357 Berlin (DE); LÜDTKE, Karsten, 12167 Berlin (DE); SCHÖNBERGER, Peter, 14169 Berlin (DE); WITKE, Marius, 10439 Berlin (DE)
(74) Vertreter: Müller, Wolfram Hubertus
(86) Internationale Anmeldenummer: PCT/DE2005/001056
(87) Internationale Veröffentlichungsnummer: WO 2005/122475

(56) Entgegenhaltungen:
- US-A- 5 689 546
- US-A- 5 907 602
- US-A1- 2003 055 946

## Beschreibung

Die Erfindung betrifft ein Verfahren zur Statusanzeige in einem Datenübertragungssystem mit verschiedenen Datenübertragungsvarianten. Weiterhin betrifft die Erfindung eine Vorrichtung zur Durchführung eines solchen Verfahrens.

### Hintergrund der Erfindung

Datenübertragung über einen oder mehrere hintereinander und möglicherweise auch parallel geschaltete Datenübertragungsabschnitte (DÜ-Abschnitte) lässt sich mittels leitungsvermittelter Datenübertragungstechniken (DÜ-Techniken) (per so genanntem "line-switching"), mittels paketvermittelter DÜ-Techniken (per so genanntem "packet switching") und mittels einer Kombination beider Techniken betreiben. "Line-switching" ist etwa im SDH-Standard der ITU (SDH = Synchronous Digital Hierarchy, ITU = International Telecommunications Union) festgelegt und umfasst insbesondere so genannte Telefonverbindungen und ATM-Verbindungen (ATM = Asynchronous Transfer Modus). Die bekannteste Paketvermittlungstechnik ist die der Internet-Technik auf Grundlage von IP-Paketen (IP = Internet Protocol), aber auch das heutige X.25-basierte DATEX_P-Netz der Deutschen Telekom beruht - wie viele andere "Datagramm-Netze" - auf Paketvermittlungstechnik.

Ein (Punkt-zu-Punkt) Datenübertragungsvorgang (DÜ-Vorgang), alias (Punkt-zu-Punkt) Kommunikationsvorgang kann (zwischen seinen i.A. nur zwei Endpunkten) verbindungsorientiert oder auch verbindungslos erfolgen. Verbindungsorientiert heißt er, wenn vor/nach dem DÜ-Vorgang eine (leitungs- oder paketvermittelte) Verbindung (zwischen diesen beiden Endpunkten) auf/abgebaut wird; verbindungslos heißt er, wenn es keinen solchen vorangehenden/nachfolgenden Verbindungsauf-/-abbau gibt. Die Bedeutung aller kommunikationstechnischer Termini in diesem Dokument entspricht der des OSI-Referenzmodells der ISO (OSI = Open Systems Interconnections, ISO = International Standards Organization), soweit dort vorgegeben und hier nicht anderweitig oder ergänzend definiert.

Anfangs- und Endpunkte der hier betrachteten Kommunikationsvorgänge können End-Systeme mit Endgeräten (im Sinne des OSI-RM) sein, aber auch irgendwelche intermediären Systeme dieser DÜ-Vorgänge. Während OSI-Referenzmodell-gemäß die Beziehung zwischen verbindungslos miteinander kommunizierende Systemen auf "Assoziationen" zwischen ihnen beruhen, wird hier auf solche subtilen Differenzierungen verzichtet und aus Vereinfachungsgründen werden für die vorliegende Erfindung alle Kommunikationsvorgänge als auf Verbindungen der kommunizierenden Systeme beruhend angesehen. Demnach wird bei der vorliegenden Erfindung von Netz-Verbindungen zwischen zwei (über ihre IP-Adressen identifizierte) End-Systemen des Internet gesprochen, obwohl zwischen ihnen - auch wenn sie miteinander kommunizieren - IP-Verbindungen weder auf- noch abgebaut werden.

Die Datenübertragung auf jedem DÜ-Abschnitt kann sowohl kabelgebunden als auch kabellos erfolgen, Letzteres beispielsweise in Funktechnik zu Satelliten-Transpondern oder terrestrischen Antennen oder auch mittels modulierter Laser in Freistrahloptik. Unabhängig davon, ob eine leitungsvermittelte, eine paketvermittelte oder eine Kombination beider Vermittlungstechniken bei einer Datenübertragung zwischen zwei Endsystemen vorliegt, können einzelne DÜ-Abschnitte kabelgebunden oder kabellos ausgebildet sein.

Für einen Kommunikationsvorgang zwischen zwei Endsystemen gibt es also eine Vielzahl von Kombinationsmöglichkeiten von kabelgebundenen und kabellosen DÜ-Abschnitte, die entweder leitungsvermittelt oder paketvermittelt gekoppelt sind, wobei in letzterem Fall auch noch stark unterschiedliche Paketweiterbeförderungs-Strategien in den Vermittlungsanlagen (auf Englisch: "switches", also "packet switches" bzw. "line switches") wirken können. Aus dieser technischen Vielfalt resultiert, dass ein DÜ-System zur Realisierung eines Kommunikationsvorgangs zwischen zwei Endsystemen eine Vielzahl unterschiedlicher Datenübertragungsvarianten (DÜ-Varianten) umfasst.

Beispielsweise aus der DE 196 45 368 A1 sind ein Verfahren und verschiedene Vorrichtungen bekannt, die bei einem (z.B. für Telefonie genutzten) DÜ-system den Wechsel zwischen den DÜ-Varianten mittels eines paketvermittelten und eines leitungsvermittelten Netzes ermöglichen. Diese Netz-Wechsel - also speziellen DÜ-Varianten-Wechsel - können automatisch von einem Managementsystem und/oder manuell von einem Nutzer ausgelöst werden.

Es kann für Nutzer eines DÜ-Systems, insbesondere eines Telefoniesystems, von Interesse sein, möglichst umfassend über eine aktuell genutzte DÜ-Variante und/oder für den Nutzer verfügbare DÜ-Varianten und deren Parameter informiert zu werden (wie z.B. die alternativen/aktuellen Kosten oder anderweitige Qualitäten), siehe auch beispielsweise die offenbarung der Patentanmeldung US-A1-2003/055946.

### Aufgabe der Erfindung

Der vorliegenden Erfindung liegt die Aufgabe zu Grunde, ein Verfahren bereit zu stellen, das dem Nutzer eines DÜ-Systems mit unterschiedlichen DÜ-Varianten einfach und unkompliziert umfassende Informationen über eine von ihm für einen Kommunikationsvorgang, insbesondere für ein Telefongespräch, aktuell genutzte DÜ-Variante und/oder über verfügbaren DÜ-Varianten bereit stellt. Weiterhin besteht die Aufgabe darin, eine Vorrichtung zur Durchführung des Verfahrens zu schaffen.

### Zusamanenfassung der Erfindung

Diese Aufgabe wird durch ein Verfahren mit den Merkmalen des Anspruchs 1 und durch eine Vorrichtung mit den Merkmalen des Anspruchs 16 gelöst. Vorteilhafte Ausführungsformen der Erfindung sind in den Unteransprüchen gekennzeichnet.

Erfindungsgemäß sind folgende Schritte vorgesehen:
- Detektieren - vor und/oder während eines Kommunikationsvorgangs - mindestens eines Anforderungssignals zur Statusermittlung einer aktuell genutzten DÜ-Variante und/oder mindestens einer verfügbaren DÜ-Variante;
- Statusermittlung einer aktuell genutzten DÜ-Variante und/oder mindestens einer verfügbaren DÜ-Variante;
- Erzeugen mindestens eines Statussignals, das Informationen zum Status der aktuell genutzten DÜ-Variante und/oder mindestens einer verfügbaren DÜ-Variante enthält und;
- Präsentieren des akustischen und/oder optischen und/oder anderweitig menschlich wahrnehmbaren Statussgignals an mindestens einem Endgerät des DÜ-Systems.

Unter einer "verfügbaren" DÜ-Variante wird hier verstanden, dass der Nutzer des DÜ-Systems
- zum einen, noch bevor er irgend eine DÜ-Variante des DÜ-Systems benutzt, Informationen über mindestens eine für ihn verfügbare DÜ-Variante erhält, und
- zum anderen, dass der Nutzer während er eine DÜ-Variante benutzt, Informationen über mindestens eine andere ihm verfügbare DÜ-Variante erhält.

Ein Anforderungssignal wird bevorzugt dadurch erzeugt, dass es durch einen Nutzer des DÜ-Systems mittels Hard- und/oder Software eines End-Systems beispielsweise in Form eines Endgerätes des DÜ-Systems generiert.

Zusätzlich oder alternativ kann eines der Anforderungssignale während der Datenübertragung mittels einer aktuell benutzten DÜ-Variante seitens eines Managementsystems des DÜ-Systems generiert werden. Dies kann beispielsweise dann der Fall sein, wenn aufgrund von DÜ-Problemen mittels eines paketvermittelten Netzes die Bandbreite der DÜ-Variante zu gering zu werden droht, so dass beispielsweise Qualitätseinbußen zu befürchten sind. Ebenso kann die Anfrage aus Kostengründen heraus motiviert sein.

Unter einem Endgerät wird insbesondere eine Vorrichtung verstanden, die derart im DÜ-System angeordnet ist, dass der Nutzer einer DÜ-Variante des DÜ-Systems das am Endgerät dargestellte Statussignal mit seinen Sinnen wahrnehmen kann. Folglich muss nicht zwingend eine bautechnische Einheit zwischen dem Endgerät bestehen, dessen sich der Nutzer bei einer von ihm genutzten DÜ-Variante bedient, und dem Endgerät, über das das Statussignal für ihn wahrnehmbar ist.

Das erfindungsgemäße Verfahren lässt sich in einer Ausführungsvariante so ausbilden, dass bei Vorliegen der Anfrage zum Wechseln der DÜ-Variante eine manuelle Bestätigung mindestens eines Nutzers notwendig ist, damit der Wechsel der DÜ-Variante von einem Managementsystem des DÜ-Systems ausgeführt wird. Hier wird also neben dem Anfrage-Auslöser mindestens einem Nutzer ermöglicht, Einfluss auf den Wechsel der DÜ-Variante zu nehmen. Will der Nutzer z.B. unabhängig von den üblicherweise höheren Kosten nicht von einer Datenübertragung in einem leitungsvermittelten Netz auf eine Datenübertragung in einem paketvermittelt Netz wechseln, so ist es insbesondere möglich, dass er die Anfrage - des Managementsystems oder des anderen Nutzers - einfach abblockt, indem er beispielsweise die erforderliche Zustimmung verweigert.

In einer weiteren Variante des Verfahrens ist es ebenso denkbar, dass alternativ oder ergänzend zu den vorangehend genannten Ereignissen, die zu einem Anforderungssignal führen, das Verfahren derart ausgebildet ist, dass eines der Anforderungssignale durch das Ereignis der Vornahme des Wechsels der DÜ-Variante generiert wird.

Dabei ist es möglich, dass die Vornahme des Wechsels vom DÜ-System automatisch mittels eines Managementsystems ausgelöst wird. Ebenso ist denkbar, dass der Nutzer den Wechsel manuell an einem End-System beispielsweise in Form eines Endgerätes unmittelbar oder über die Software des Managementsystems mittelbar steuert.

Im ersten Fall agiert das Managementsystem des DÜ-Systems anhand seiner vorgegebenen Parameter (z.B. Kosten und/oder Bandbreite) automatisch. Wenn ein automatischer Wechsel der DÜ-Variante stattfindet oder bereits stattgefunden hat, kann der Nutzer ebenso automatisch über den Statuswechsel der von ihm genutzten DÜ-Variante informiert werden. Im zweiten Fall wählt der Nutzer selbständig die von ihm gewünschte DÜ-Variante und erhält das Statussignal der zur Datenübertragung aktuell genutzten DÜ-Variante in Form einer optischen und/oder akustischen und/oder anderweitig menschlich wahrnehmbaren Bestätigung seiner gewünschten Auswahl.

Es kann von Vorteil sein, dass das Statussignal für mindestens einen Teilnehmer an einem Endgerät des DÜ-Systems optisch und/oder akustisch und/oder anderweitig menschlich wahrnehmbar "im Hintergrund" empfangen wird. Dadurch erhält er zu der von ihm benutzten DÜ-Variante die jeweiligen Informationen ohne, insbesondere bei einem Telefonat, den Kommunikationsvorgang oder seinen Kommunikationspartner zu stören.

Bevorzugt enthalten die Statussignale mindestens eine der folgenden Informationen:
- aktuelle (erste) Qualitäten der aktuell benutzen DÜ-Variante,
- kumulierte (zweite) Qualitäten der aktuell benutzen DÜ-Variante,
- aktuelle (dritte) Qualitäten einer anderen verfügbaren DÜ-Variante,
- kumulierte (vierte) Qualitäten einer anderen verfügbaren DÜ-Variante,
- Wechsel zu einer anderen DÜ-Variante (mit mindestens einer anderen Qualität) möglich,
- Wechsel zu einer anderen DÜ-Variante (mit mindestens einer anderen Qualität) angefordert und
- Wechsel zu einer anderen DÜ-Variante (mit mindestens einer anderen Qualität) durchgeführt.

Die jeweiligen Qualitäten können ganz oder teilweise identisch sein bzw. sich überschneiden. "Qualitäten" sind beispielsweise die anfallenden Kosten/Zeiteinheit und/oder die Bandbreite der Datenübertragung. Eine Qualität kann auch das verwendete Telekommunikationsnetz, das für die Datenübertragung verwendete Medium oder die Art der Datenübertragung (paketvermittelt oder leitungsvermittelt) betreffen. Unter "kumulierten" Qualitäten werden die mit der Nutzungszeit aufsummierten aktuellen Qualitäten verstanden, beispielsweise die Kosten oder übertragenen Datenmengen.

Bei einer überschaubaren Anzahl von Qualitäten der DÜ-Varianten ist es für einen Nutzer auf einfache Weise möglich, den Status oder die eingetretene Statusänderung der DÜ-Variante in kürzester Zeit, d.h. ohne wesentliche Ablenkung parallel zu ihrer Benutzung wahrzunehmen.

In einer bevorzugten Ausgestaltung wird ein Anforderungssignal dann erzeugt, wenn die aktuell genutzte DÜ-Variante eine paketvermittelte Datenübertragung betrifft und die verfügbare DÜ-Variante eine leitungsvermittelte Datenübertragung betrifft, oder umgekehrt. Es wird dann ein Statussignal erzeugt, dass Informationen über die aktuelle (paket- oder leitungsvermittelte) Datenübertragung und/oder Informationen über eine alternative (leitungs- oder paketvermittelte) Datenübertragung enthält, wobei die alternative Datenübertragung statt der aktuellen Datenübertragung durch einen Nutzer oder ein Managementsystem wählbar ist. Ein derartiger Wechsel zwischen einer Datenübertragung über ein Paketvermittlungsnetz und einer Datenübertragung über ein Leitungsvermittlungsnetz ist in der DE 196 45 368 A1 beschrieben.

Eine besonders einfache Variante eines akustischen Statussignals besteht darin, dass das akustische Statussignal als in den aktuellen Kommunikationsvorgang eingeblendete Sprechansage mit Statusinformationen ausgebildet ist. Ebenso ist jedoch denkbar, das akustische Signal als kombiniertes Sprechansage-Tonsignal oder als reines Tonsignal auszubilden. Ein reines Tonsignal hat den Vorteil, dass es sehr kurz sein kann, ohne dass es dadurch schlechter wahrgenommen wird. Die verschiedenen, vorangehend genannten Situationen lassen sich auf einfache Weise als eingängige Tonsignale codieren. Solche Tonsignale muss man im Gegensatz zu einer Sprechansage nur wahrnehmen und nicht verstehen. Auf diese Weise erscheinen sie für den Nutzer weniger störend.

Bei einer vorteilhaften Variante des Verfahrens ist das akustische Statussignal in Form einer Sprechansage in ein dem Nutzer zur Verfügung stehendes Sprachsteuerungssystem, insbesondere ein so genanntes Interactive Voice Response System (IVR), integriert.

Eine weitere bevorzugte Variante des Verfahrens ist derart ausgebildet, dass das Statussignal an einem Datenübertragungssystem-Endgerät alternativ oder zusätzlich zu einem akustischen Signal in Form eines optischen Signals vorliegt. Optische Signale haben den Vorteil, dass sie für einen Nutzer noch diskreter als akustische Signale wahrnehmbar sind. Besonders einfach ist es, wenn das optische Statussignal auf dem Display eines Endgerätes in Form eines analogen oder digitalen Telefons oder eines Computers angezeigt wird.

Bei allen Ausführungsformen der Erfindung kann das optische und/oder akustische und/oder anderweitig wahrnehmbare Statussignal Information über die anfallenden Kosten/Zeiteinheit und/oder die Bandbreite der aktuell benutzten DÜ-Variante und/oder solche Qualitäten mindestens einer weiteren verfügbaren DÜ-Variante umfassen.

Die Erfindung stellt zur Implementierung des erfindungsgemäßen Verfahrens eine neuartige Vorrichtung zur Verfügung. Sie umfasst:
Mindestens eine Schnittstelle zur Integration der Vorrichtung in ein DÜ-System und Mittel zum Präsentieren mindestens eines akustischen und/oder optischen oder anderweitig menschlich wahrnehmbaren Statussignals, das Informationen zum Status einer aktuell genutzten DÜ-Variante und/oder zum Status mindestens einer noch nicht genutzten verfügbaren DÜ-Variante präsentiert.

Die Mittel zum Präsentieren dienen dabei zum Erzeugen und/oder Darstellen des Statussignals.

Mindestens ein Anforderungssignal, das die Generierung mindestens eines Statussignals zur Folge hat, kann von außen durch die vorhandene Hard- und/oder Software des DÜ-Systems an die Vorrichtung gelangen. In einer bevorzugten Variante der erfindungsgemäßen Vorrichtung weist sie selbst Mittel zum Generieren eines Anforderungssignals auf und diese Mittel sind derart ausgebildet, dass sie sich durch einen Nutzer des DÜ-Systems unmittelbar und/oder mittels eines DÜ-Endsystems (bzw. seiner Hard- und/oder Software) aktivieren lassen.

Bei einer weiteren bevorzugten Variante der erfindungsgemäßen Vorrichtung weist sie Mittel zum Detektieren und Präsentieren in menschlich wahrnehmbarer Weise eines anderweitig erzeugten Anforderungssignals auf. Ebenso kann sie bevorzugt Mittel zur Ermittelung des Status der zur Datenübertragung aktuell genutzten DÜ-Variante und/oder zum Ermitteln des Status mindestens einer verfügbaren DÜ-Variante des DÜ-Systems vorsehen.

Dadurch wird ein Gerät bereitgestellt, das sich neben oder in einem Endsystem (z.B. in Form eines Endgerätes als analoges oder digitales Telefon oder als PC) rein hardwaretechnisch in das DÜ-System integrieren lässt. Dies kann beispielsweise dadurch geschehen, dass es neben dem Telefon bzw. PC positioniert wird (oder als Zusatzmodul zu dessen Hardware ausgebildet ist) und die Netzanschluss-Leitung des Telefons bzw. PCs durchschleift. Diese Variante kann es Nutzern mit geringen technischen Kenntnissen erleichtern, die erfindungsgemäße Vorrichtung zu installieren und zu betreiben, insbesondere wenn sie dazu keine weitere softwareseitige Anpassung vornehmen müssen.

Bevorzugt sind die Mittel zum Erzeugen mindestens eines akustischen und/oder optischen und/oder anderweitig menschlich wahrnehmbaren Statussignals, das den Status der zur Datenübertragung aktuell genutzten und/oder verfügbaren DÜ-Varianten darstellt, derart ausgebildet, dass sich das Statussignal optisch an einer Anzeigevorrichtung eines End-Systems anzeigen und/oder akustisch von seinem Nutzer vernehmen und/oder anderweitig von ihm wahrnehmen lässt.

Eine bevorzugte Variante der Vorrichtung ist derart ausgebildet, dass sich die Präsentation des Statussignals durch ihren Nutzer unterdrücken lässt. Dies hat den Vorteil, dass der Nutzer bei Bedarf nicht durch die Wahrnehmung der optischen und/oder akustischen und/oder anderweitigen Signale abgelenkt ist.

Mit Vorteil ist die erfindungsgemäße Vorrichtung in einem Router, einem Voice-over-Internet-Terminal-Adapter, einem analogen bzw. digitalen Telefon, einem Computer oder einer Vermittlungsstelle jedweder Art für ein DÜ-System integriert.

Weitere Eigenschaften und Merkmale der Erfindung werden im Zusammenhang mit den folgenden Figuren erläutert. Es zeigen:
- Figur 1a:: eine schematische Darstellung eines ersten DÜ-Systems, bei dem die vorliegende Erfindung einsetzbar ist;
- Figur 1b:: eine schematische Darstellung eines zweiten DÜ-Systems, bei dem die vorliegende Erfindung einsetzbar ist;
- Figur 2:: eine schematische Darstellung einer ersten Variante der erfindungsgemäßen Vorrichtung in ein Telefon integriert;
- Figur 3a:: eine schematische Darstellung einer zweiten Ausführungsform der erfindungsgemäßen Vorrichtung in Form eines separaten Geräts in Kombination mit einem Telefon als Endgerät und
- Figur 3b:: eine schematische Darstellung der zweiten Ausführungsform der erfindungsgemäßen Vorrichtung in Form eines separaten Geräts in Kombination mit einem PC als End-System.

### Beschreibung mehrerer bevorzugter Ausführungsbeispiele

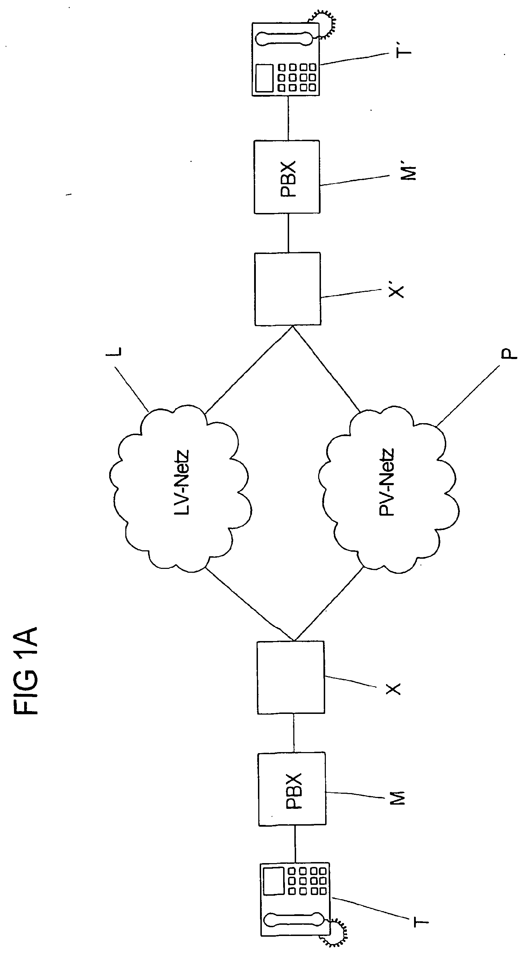

Figur 1a zeigt die schematische Darstellung eines ersten DÜ-Systems, bei dem die vorliegende Erfindung Anwendung finden kann. Dieses DÜ-System ist hier als Telefoniesystem ausgebildet. Zwei Endsystems als TK-Endgeräte beispielsweise in Form zweier analoger oder digitaler Telefone T, T' sind jeweils über Telefon-Nebenstellenanlagen (PBXes) M, M' mit einem Switch X, X' verbunden. Der Switch X routet die zu übertragenden Daten des Endgeräts T an das Endgerät T' entweder über ein Leitungsvermittlungsnetz L, insbesondere das analoge/digitale Telefonnetz (PSTN/ISDN), oder über ein Paketvermittlungsnetz P, insbesondere das Internet (IP-Netz). In diesem Fall umfasst die eine DÜ-Variante die Datenübertragung über ein leitungsvermitteltes Netz und die andere DÜ-Variante die Datenübertragung über ein paketvermitteltes Netz. Eine leitungsvermittelte DÜ-Variante kann zumindest auf einer Teilstrecke in Form eines DÜ-Abschnitts auch über eine Satellitenstrecke erfolgen.

Ebenso sind DÜ-Varianten denkbar, die die Datenübertragung nicht nur über ein leitungsvermitteltes oder alternativ über ein paketvermitteltes Netz nutzen. Wie in der Beschreibungseinleitung dargestellt, sind eine Vielzahl von DÜ-Varianten aus leitungs- und paketvermittelter Datenübertragung mittels kabelgebundener/-loser DÜ-Abschnitte unterschiedlicher Qualitäten kombinierbar.

Die PBX M, M' ist optional: das Endgerät T, T' kann auch unmittelbar an den Switch X, X' angeschlossen sein.

Die Steuersignale, die den Switch X derart steuern, dass Daten entweder über das Paketvermittlungsnetz oder über das Leitungsvermittlungsnetz übertragen werden, können durch den Endnutzer oder von einem Managementsystem erzeugt werden. Zu den Einzelheiten solcher Telefoniesysteme wird hier ausdrücklich auf die Offenbarung der eingangs erwähnten DE 196 45 368 A1 der Anmelderin verwiesen.

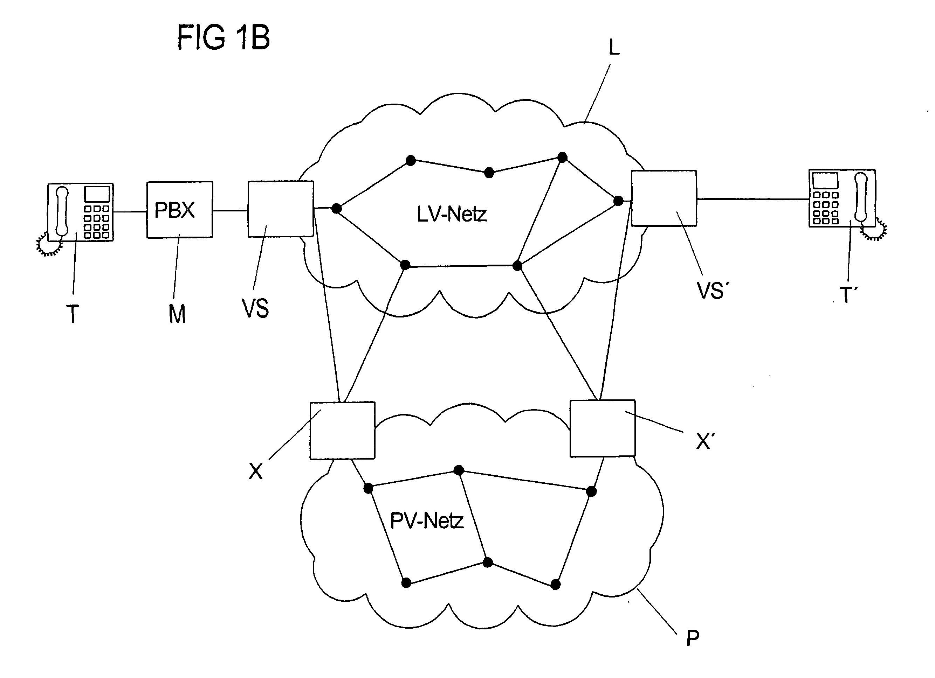

Figur 1b zeigt eine zweite beispielhafte Variante eines DÜ-Systems in Form eines Telefoniesystems, bei dem die vorliegende Erfindung zum Einsatz kommen kann. Ein erstes Telekommunikationsendgerät in Form eines analogen oder digitalen Telefons T ist über eine PBX M mit einer Vermittlungsstelle VS des leitungsvermittelten Netz L verbunden. Dieses leitungsvermittelte Netz L umfasst eine weitere Vermittlungsstelle VS', an die ein zweites TK-Endgerät in Form eines analogen oder digitalen Telefons T' ohne Telefonanlage direkt angeschlossen ist.

Die beiden Vermittlungsstellen VS, VS' des leitungsvermittelten Netzes L weisen neben Verbindungen zu verschiedenen seiner Knoten jeweils eine Verbindung zu einem zugeordneten Switch X, X' auf. Diese Switches X, X' können etwa an oder in einem so genannten Point of Presence (POP) des Paketvermittlungsnetzes angeordnet sein, sie können sich aber auch bei der Vermittlungsstelle VS, VS' befinden.

Abhängig von den vorgegebenen Parametern eines Managementsystems und/oder Endbenutzer-gesteuert werden die Switches X, X' die Datenübertragung zwischen den beiden Telefonen T, T' entweder über das leitungsvermittelte Netz L oder das paketvermittelte Netz P abwickeln bzw. zwischen diesen beiden DÜ-Varianten wechseln. Das Anforderungssignal zur Statusermittlung kann sowohl seitens des Nutzers an einem Endgerät T, T' als auch automatisch durch das Managementsystem generiert werden.

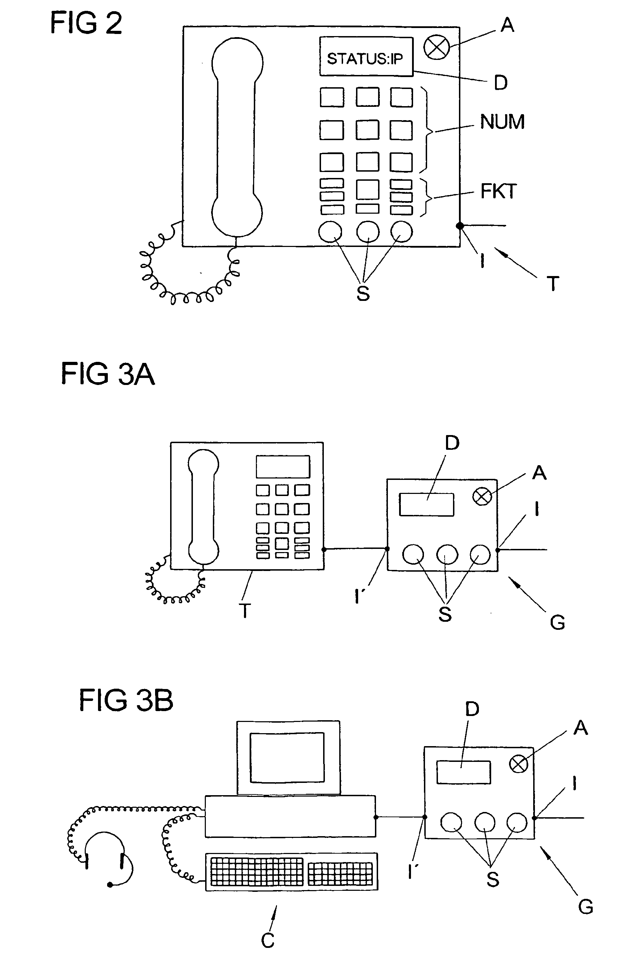

Die Figur 2 zeigt eine erste Ausführungsform der erfindungsgemäßen Vorrichtung, die in ein TK-Endgerät in Form eines analogen oder digitalen Telefons T integriert ist. Das Telefon T ist über eine Schnittstelle I in das DÜ-System integriert. Neben den üblichen Ausstattungsmerkmalen eines Displays D, eines Zahlenblocks NUM und verschiedener Funktionstasten FKT weist dieses Telefon T auch noch drei Sondertasten S und eine optische Anzeige A auf.

Eine erste Sondertasten S dient beispielsweise dazu, dass der Nutzer des Telefons ein Anforderungssignal generieren kann, wodurch im Display D der Status der zur Datenübertragung aktuell und/oder mindestens einer anderen verfügbaren DÜ-Variante für die Kommunikation mit dem Telefon T angezeigt wird. Ebenso ist jedoch denkbar, dass das Anforderungssignal zur Statusanzeige der aktuell genutzten DÜ-Variante von der Telefonanlage M oder dem Switch X automatisch generiert wird. Die Statusermittlung der aktuell genutzten und/oder mindestens einer anderen verfügbaren DÜ-Variante kann ebenfalls entweder am Telefon T, an der Telefonanlage M oder am Switch X vorgenommen werden. Die Darstellung des ermittelten Status der aktuell genutzten DÜ-Variante und mindestens einer anderen verfügbaren DÜ-Variante erfolgt im vorliegenden Fall am Display D des Telefons T (wobei der Benutzer bei kleinem Display zwischen diesen verschiedenen Informationen etwa mittels dieser Sondertaste umschalten kann).

Eine weitere Sondertaste S kann dem Nutzer beispielsweise ermöglichen, damit den Wechsel zwischen einer paketvermittelten und einer leitungsvermittelten DÜ-Variante anzufordern. Der Nutzer generiert in diesem Fall nur den Befehl, den Status zu ändern und steuert damit den Switch. Das Anforderungssignal, das zur Ermittlung des Status und somit zu einem Statussignal führt, kann dabei wiederum entweder am/vom Telefon T oder von der PBX M oder vom Switch X ausgelöst werden.

Die dritte Sondertaste S ermöglicht dem Nutzer beispielsweise, damit seine Zustimmung zu einer Anfrage des Switches zu einem Wechsel zwischen zwei DÜ-Varianten zu signalisieren. Eine solche Anfrage zum Wechseln der DÜ-Variante lässt sich z.B. durch eine entsprechende Mitteilung im Display D zusammen mit einem dauerhaften oder periodischen Aufleuchten der Leuchtanzeige A realisieren.

Wie bereits im Zusammenhang mit der Erläuterung der Ansprüche dargestellt, ist es vorteilhaft, alternativ oder ergänzend zu optischen Statussignalen akustische Statussignale vorzusehen. Diese lassen sich beispielsweise nur für den Nutzer des Telefons T hörbar in seinen Kommunikationsvorgang einblenden. Diese akustischen Statussignale lassen sich beispielsweise im Telefon T selbst durch einen digitalen Sprachgenerator realisieren. Ebenso ist vorstellbar, dass die akustischen Signale in digitaler Form in der PBX oder dem Switch gespeichert und abrufbar sind.

Es ist selbstverständlich, dass das Telefon T auch eine größere oder eine geringere Anzahl an Sondertasten S aufweisen kann. Ebenso ist es möglich, mittels einer per Software realisierten Zusatznutzung der vorhandenen Funktionstasten handelsüblicher Telefone vollständig auf Sondertasten und die Leuchtanzeige zu verzichten. In einem solchen Fall wird das erfindungsgemäße Verfahren rein softwaretechnisch mittels der Software des Managementsystems im/am Switch realisiert.

Ebenso ist denkbar, das Verfahren mittels eines separaten Statusanzeigegeräts G zu realisieren, das dem Telefon T, wie in Figur 3a dargestellt, auf einfache Weise mittels zweier Schnittstellen I, I' vorgeschaltet wird. Ebenso ist denkbar, das separate Gerät G dem Telefon T über eine einzige Schnittstelle I nebenzuschalten.

Dieses separate Gerät G umfasst beispielsweise ein eigenes Display D samt Leuchtanzeige A und Sondertasten S. Diese ermöglichen dem Nutzer die gleiche, vorangehend zu Figur 2 beschriebene Funktionalität.

Figur 3b zeigt eine weitere Anwendungsmöglichkeit des separaten Gerätes G. Im Unterschied zu Figur 3a ist hier an Stelle des Endgerätes in Form eines Telefons T ein mit einem Headset als telefonfähiger Computer C ausgebildetes Endgerät vorgesehen. Die Funktionalität des separaten Geräts G ist identisch zur vorangehend zu Figur 3a beschriebenen Funktionalität.

Selbstverständlich lässt sich die Funktionalität des Geräts G auch durch ein Modifizieren der Telefoniesoftware umsetzen, die für einen in Figur 3b gezeigten Computer C ohnehin vorhanden sein muss. Auf diese Weise kann auf zusätzliche Hardware in Form des Geräts G ganz verzichtet werden.

### Bezugszeichenliste

- T, T': TK-Endgerät in Form eines Telefons
- C: TK-Endgerät in Form eines Computers mit angeschlossenem Headset zum Telefonieren
- L: Leitungsvermittlungsnetz
- P: Paketvermittlungsnetz
- M, M': Telefon-Nebenstellenanlage (PBX = Private Branch Exchange)
- X, X': Switch
- A: Leuchtanzeige
- D: Display
- NUM: Nummerntasten
- FKT: Funktionstasten
- S: Sondertasten
- G: TK-Endgerät-Komponente in Form eines separater Statusanzeigegeräts
- I, I': Schnittstellen zur Integration im DÜ-System
- VS, VS': Vermittlungsstellen im leitungsvermittelten Netz

## Patentansprüche

1. Verfahren zur Statusanzeige in einem Datenübertragungssystem, Dü-System, das unterschiedliche Kombinationsmöglichkeiten von Datenübertragungsabschnitten, DÜ-varianten, zur Realisierung eines Kommunikationsvorganges zwischen zwei Endsystemen umfasst, wobei eine DÜ-Variante mehrere Datenübertragungsabschnitte, die hintereinander und/oder parallel geschaltet sind, aufweist,
**gekennzeichnet durch die folgenden Schritte:**
• Detektieren mindestens eines Anforderungssignals zur Statusermittlung einer zur Datenübertragung aktuell genutzten DÜ-Variante und/oder zur Statusermittlung mindestens einer verfügbaren DÜ-Variante des DÜ-Systems, wobei die aktuell genutzte DÜ-Variante die zwei Endsysteme zwecks Bereitstellung eines aktuellen Kommunikationsvorgangs zwischen diesen verbindet und eine verfügbare DÜ-Variante die zwei Endsysteme zwecks Bereitstellung eines potentiellen zukünftigen Kommunikationsvorgangs zwischen diesen verbinden kann;
• Ermitteln des Status einer zur Datenübertragung aktuell genutzten DÜ-Variante und/oder mindestens einer verfügbaren DÜ-Variante;
• Erzeugen mindestens eines akustischen und/oder optischen Statussignals, das Informationen zum Status der zur Datenübertragung aktuell genutzten DÜ-Variante und/oder mindestens einer verfügbaren DÜ-Variante enthält, und
• Präsentieren des akustischen und/oder optischen Statussignals an mindestens einem Endgerät (T, C, G) eines Endsystems des DÜ-Systems.

2. Verfahren gemäß Anspruch 1, **dadurch gekennzeichnet, dass** eines der Anforderungssignale durch einen Nutzer des DÜ-Systems mittels Hard- und/oder Software eines Endgeräts (T, C, G) des DÜ-Systems generieren wird.

3. Verfahren gemäß Anspruch 1 oder 2, **dadurch gekennzeichnet, dass** ein Anforderungssignal generiert wird, wenn eine seitens eines Managementsystems ausgelöste Anfrage vorliegt, ob ein Wechsel von der aktuell genutzten zu einer anderen verfügbaren DÜ-Variante erfolgen soll.

4. Verfahren gemäß Anspruch 3, **dadurch gekennzeichnet, dass** bei Vorliegen der Anfrage zum Wechsel der DÜ-Variante eine Bestätigung des Nutzers notwendig ist, damit dieser Wechsel von einem Managementsystem des DÜ-Systems ausgeführt wird.

5. Verfahren gemäß einem der Ansprüche 1 bis 4, **dadurch gekennzeichnet, dass** eines der Anforderungssignale durch das Ereignis der Vornahme des Wechsels einer DÜ-Variante generiert wird.

6. Verfahren gemäß Anspruch 5, **dadurch gekennzeichnet, dass** die Vornahme des Wechsels der DÜ-Variante entweder automatisch auf Veranlassung eines Managementsystems oder durch einen Nutzer des DÜ-Systems an einem Endgerät (T, C, G) des DÜ-Systems ausgelöst wird.

7. Verfahren gemäß einem der vorangehenden Ansprüche, **dadurch gekennzeichnet, dass** das oder die Statussignale jeweils mindestens eine der folgenden Informationen umfassen:
• aktuelle Qualitäten der aktuell benutzten DÜ-Variante,
• kumulierte Qualitäten der aktuell benutzen DÜ-Variante,
• aktuelle Qualitäten einer anderen verfügbaren DÜ-Variante,
• kumulierte Qualitäten einer anderen verfügbaren DÜ-Variante,
• Wechsel zu einer anderen DÜ-Variante mit mindestens einer anderen Qualität möglich,
• Wechsel zu einer anderen DÜ-Variante mit mindestens einer anderen Qualität angefordert und
• Wechsel zu einer anderen DÜ-Variante mit mindestens einer anderen Qualität durchgeführt.

8. Verfahren gemäß einem der vorangehenden Ansprüche, **dadurch gekennzeichnet, dass** das DÜ-System mindestens eine DÜ-Variante mit einer Datenübertragung über ein paketvermitteltes Netz und mindestens eine DÜ-Variante mit einer Datenübertragung über ein leitungsvermitteltes Netz aufweist.

9. Verfahren gemäß einem der vorangehenden Ansprüche, **dadurch gekennzeichnet, dass** durch die Datenübertragung ein Kommunikationsvorgang generiert wird, und das Statussignal als akustisches Signal in den aktuellen Kommunikationsvorgang eingeblendet wird.

10. Verfahren gemäß Anspruch 9, **dadurch gekennzeichnet, dass** das akustische Statussignal nur für den Nutzer des DÜ-Systems hörbar ist, der den aktuellen Kommunikationsvorgang initiiert hat.

11. Verfahren gemäß Anspruch 9 oder 10, **dadurch gekennzeichnet, dass** das akustische Statussignal als in den aktuellen Kommunikationsvorgang eingeblendete Sprechansage mit Statusinformationen ausgebildet ist.

12. Verfahren gemäß Anspruch 11, **dadurch gekennzeichnet, dass** das akustische Statussignal in Form einer Sprechansage in ein dem Nutzer zur Verfügung stehendes Sprachsteuerungssystem, insbesondere in ein Interactive Voice Response System, integriert ist.

13. Verfahren gemäß einem der vorangehenden Ansprüche, **dadurch gekennzeichnet, dass** das Statussignal an einem Endgerät (T, C, G) des DÜ-Systems in Form eines optischen Signals vorliegt.

14. Verfahren gemäß Anspruch 13, **dadurch gekennzeichnet, dass** das optische Signal auf einem Display (D) eines digitalen oder analogen Telefons (T) oder auf dem Bildschirm eines Computers (C) angezeigt wird.

15. Verfahren gemäß einem der vorangehenden Ansprüche, **dadurch gekennzeichnet, dass** das optische und/oder akustische Statussignal Information über die anfallenden aktuellen Kosten pro Zeiteinheit, die kumulierten Kosten und/oder andere Qualitätsparameter der aktuell genutzten und/oder mindestens einer verfügbaren DÜ-Variante umfasst.

16. Vorrichtung (T, C, G) zur Durchführung eines Verfahrens gemäß mindestens einem der Ansprüche 1 bis 15 mit:
• mindestens einer Schnittstelle (I) zur Integration der Vorrichtung (T, C, G) in ein DÜ-System, das unterschiedliche Kombinationsmöglichkeiten von Daten-übertragungsabschnitten (DÜ-Varianten) zur Realisierung eines Kommunikationsvorganges zwischen zwei Endsystemen umfasst, wobei eine DÜ-Variante mehrere Datenübertragungsabschnitte, die hintereinander und/oder parallel geschaltet sind, aufweist, und
• Mitteln (S, D, A) zum Präsentieren mindestens eines akustischen und/oder optischen Statussignals, das Informationen zum Status einer aktuell genutzten DÜ-Variante und/oder zum Status mindestens einer anderen verfügbaren DÜ-Variante präsentiert, wobei die aktuell genutzte DÜ-Variante die zwei Endsysteme zwecks Bereitstellung eines aktuellen Kommunikationsvorgangs zwischen diesen verbindet und eine verfügbare DÜ-Variante die zwei Endsysteme zwecks Bereitstellung eines potentiellen zukünftigen Kommunikationsvorgangs zwischen diesen verbinden kann.

17. Vorrichtung gemäß Anspruch 16, **dadurch gekennzeichnet, dass** die Vorrichtung Mittel (S) zum Generieren mindestens eines Anforderungssignals aufweist.

18. Vorrichtung gemäß Anspruch 17, **dadurch gekennzeichnet, dass** die Mittel (S) zum Generieren des Anforderungssignals derart ausgebildet sind, dass sie sich durch einen Nutzer des DÜ-Systems mittels Hard-und/oder Software eines DÜ-System-Endgerätes aktivieren lassen.

19. Vorrichtung gemäß einem der Ansprüche 16 bis 18, **dadurch gekennzeichnet, dass** die Vorrichtung Mittel zum Detektieren und Präsentieren in menschlich wahrnehmbarer Weise eines Anforderungssignals aufweist.

20. Vorrichtung gemäß einem der Ansprüche 16 bis 19, **dadurch gekennzeichnet, dass** sie Mittel zur Ermittlung des Status der aktuell genutzten DÜ-Variante und/oder mindestens einer verfügbaren DÜ-Variante aufweist.

21. Vorrichtung gemäß einem der Ansprüche 16 bis 20, **dadurch gekennzeichnet, dass** die Mittel zum Erzeugen mindestens eines akustischen und/oder optischen Statussignals, das den Status der zur Datenübertragung aktuell genutzten und/oder verfügbaren DÜ-Varianten darstellt, derart ausgebildet sind, dass sich das Statussignal optisch an einer Anzeigevorrichtung eines Endsystems anzeigen und/oder aktustisch von seinem Nutzer vernehmen lässt.

22. Vorrichtung gemäß einem der Ansprüche 16 bis 21, **dadurch gekennzeichnet, dass** die Vorrichtung (T, C, G) derart ausgebildet ist, dass sich die Präsentation des Statussignals durch den Nutzer des DÜ-Systems unterdrücken lässt.

23. Analoges oder digitales Telefon mit einer Vorrichtung gemäß einem der Ansprüche 16 bis 22.

24. Computer mit einer Vorrichtung gemäß einem der Ansprüche 16 bis 22.

## Claims

1. Method for indicating the status in a data transmission network, DT network, which comprises different possibilities for combining data transmission sections, DT variants, for implementing a communication process between two end networks, a DT variant having a number of data transmission sections which are connected in series and/or in parallel,
**characterized by the following steps:**
• detecting at least one request signal for determining the status of a DT variant currently used for data transmission and/or for determining the status of at least one available DT variant of the DT network, wherein the currently used DT variant connects the two end networks for the purpose of providing a current communication process between these, and an available DT variant can connect the two end networks for the purpose of providing a potential future communication process between these;
• determining the status of a DT variant currently used for data transmission and/or of at least one available DT variant;
• generating at least one audible and/or visual status signal which contains information on the status of the DT variant currently used for data transmission and/or of at least one available DT variant, and
• presenting the audible and/or visual status signal on at least one terminal (T, C, G) of an end network of the DT network.

2. Method according to Claim 1, **characterized in that** one of the request signals is generated by a user of the DT network by means of hardware and/or software of a terminal (T, C, G) of the DT network.

3. Method according to Claim 1 or 2, **characterized in that** a request signal is generated when a request triggered by a management system is present as to whether there should be a change from the currently used DT variant to another available DT variant.

4. Method according to Claim 3, **characterized in that**, when the request for changing the DT variant is present, an acknowledgement of the user is necessary so that this change is carried out by a management system of the DT network.

5. Method according to one of Claims 1 to 4, **characterized in that** one of the request signals is generated by the event of performing the change of a DT variant.

6. Method according to Claim 5, **characterized in that** the performance of the change of the DT variant is triggered either automatically on initiation of a management system or by a user of the DT network at a terminal (T, C, G) of the DT network.

7. Method according to one of the preceding claims, **characterized in that** the status signal or status signals in each case comprise at least one of the following information items:
• current qualities of the currently used DT variant,
• cumulative qualities of the currently used DT variant,
• current qualities of another available DT variant,
• cumulative qualities of another available DT variant,
• change to another DT variant having at least one other quality possible,
• change to another DT variant having at least one other quality requested and
• change to another DT variant having at least one other quality performed.

8. Method according to one of the preceding claims, **characterized in that** the DT network has at least one DT variant with a data transmission via a packet-switched network and at least one DT variant with a data transmission via a circuit-switched network.

9. Method according to one of the preceding claims, **characterized in that**, by means of the data transmission, a communication process is generated and the status signal is inserted into the current communication process as an audible signal.

10. Method according to Claim 9, **characterized in that** the audible status signal is only audible for the user of the DT network who has initiated the current communication process.

11. Method according to Claim 9 or 10, **characterized in that** the audible status signal is formed as a spoken announcement with status information, inserted into the current communication process.

12. Method according to Claim 11, **characterized in that** the audible status signal in the form of a spoken announcement is integrated into a voice control system available to the user, particularly into an interactive voice response system.

13. Method according to one of the preceding claims, **characterized in that** the status signal is present in the form of a visual signal at a terminal (T, C, G) of the DT network.

14. Method according to Claim 13, **characterized in that** the visual signal is indicated on a display (D) of a digital or analogue telephone (T) or on the screen of a computer (C).

15. Method according to one of the preceding claims, **characterized in that** the visual and/or audible status signal comprises information about the due current costs per unit time, the cumulative costs and/or other quality parameters of the currently used and/or at least one available DT variant.

16. Device (T, C, G) for carrying out a method according to at least one of Claims 1 to 15, comprising:
• at least one interface (I) for integrating the device (T, C, G) into a DT network which comprises different possibilities for combining data transmission sections (DT variants) for implementing a communication process between two end networks, a DT variant having a number of data transmission sections which are connected in series and/or in parallel, and
• means (S, D, A) for presenting at least one audible and/or visual status signal which presents information on the status of a currently used DT variant and/or on the status of at least one other available DT variant, wherein the currently used DT variant connects the two end networks for the purpose of providing a current communication process between these, and an available DT variant can connect the two end networks for the purpose of providing a potential future communication process between these.

17. Device according to Claim 16, **characterized in that** the device has means (S) for generating at least one request signal.

18. Device according to Claim 17, **characterized in that** the means (S) are constructed for generating the request signal in such a manner that they can be activated by a user of the DT network by means of hardware and/or software of a DT network terminal.

19. Device according to one of Claims 16 to 18, **characterized in that** the device has means for detecting and presenting a request signal in a humanly perceptible manner.

20. Device according to one of Claims 16 to 19, **characterized in that** it has means for determining the status of the currently used DT variant and/or of at least one available DT variant.

21. Device according to one of Claims 16 to 20, **characterized in that** the means for generating at least one audible and/or visual status signal, which represents the status of the DT variants currently used for data transmission and/or available, are constructed in such a manner that the status signal can be displayed visually on a display device of an end network and/or audibly perceived by its user.

22. Device according to one of Claims 16 to 21, **characterized in that** the device (T, C, G) is constructed in such a manner that the presentation of the status signal can be suppressed by the user of the DT network.

23. Analogue or digital telephone comprising a device according to one of Claims 16 to 22.

24. Computer having a device according to one of Claims 16 to 22.

## Revendications

1. Procédé destiné à afficher l'état d'un système de transmission de données, ou système TD, qui comprend différentes combinaisons possibles de sections de transmission de données, ou variantes TD, pour la réalisation d'un processus de communication entre deux systèmes terminaux, dans lequel une variante TD comporte plusieurs sections de transmission de données qui sont connectées l'une à la suite de l'autre et/ou en parallèle,
**caractérisé par les étapes consistant à :**
- détecter au moins un signal de demande pour la détermination de l'état d'une transmission de données d'une variante TD en cours d'utilisation et/ou pour la détermination de l'état d'au moins une variante TD disponible du système TD, dans lequel la variante TD en cours d'utilisation connecte les deux systèmes terminaux afin d'établir entre ceux-ci un processus de communication courant et une variante TD disponible peut connecter les deux systèmes terminaux afin d'établir entre ceux-ci un futur processus de communication potentiel ;
- déterminer l'état d'une variante TD en cours d'utilisation pour la transmission de données et/ou d'au moins une variante TD disponible ;
- générer au moins un signal d'état acoustique et/ou optique qui contient des informations concernant l'état de la variante TD en cours d'utilisation pour la transmission de données et/ou d'au moins une variante TD disponible, et
- présenter le signal d'état acoustique et/ou optique sur au moins un terminal (T, C, G) d'un système terminal du système TD.

2. Procédé selon la revendication 1, **caractérisé en ce que** l'un des signaux de demande est généré par un utilisateur du système TD au moyen du matériel et/ou du logiciel d'un terminal (T, C, G) du système TD.

3. Procédé selon la revendication 1 ou 2, **caractérisé en ce qu'**un signal de demande est généré lorsqu'une demande déclenchée du côté d'un système de gestion est présentée, s'il doit se produire un passage de la variante TD en cours d'utilisation à une autre variante TD disponible.

4. Procédé selon la revendication 3, **caractérisé en ce qu'**en présence de la demande de changement de variante TD, une confirmation de l'utilisateur est nécessaire pour que ce changement soit exécuté par un système de gestion du système TD.

5. Procédé selon l'une quelconque des revendications 1 à 4, **caractérisé en ce que** l'un des signaux de demande est généré par l'événement constitué par l'exécution d'un changement de variante TD.

6. Procédé selon la revendication 5, **caractérisé en ce que** l'exécution du changement de variante TD est déclenchée soit automatiquement à l'initiative d'un système de gestion soit par un utilisateur du système TD sur un terminal (T, C, G) du système TD.

7. Procédé selon l'une quelconque des revendications précédentes, **caractérisé en ce que** le ou les signaux d'état comprend/comprennent chacun au moins l'une des informations suivantes :
- des qualités courantes de la variante TD en cours d'utilisation,
- des qualités cumulées de la variante TD en cours d'utilisation,
- des qualités courantes d'une autre variante TD disponible,
- des qualités cumulées d'une autre variante TD disponible,
- un passage possible à une autre variante TD ayant au moins un autre qualité,
- un passage requis à une autre variante TD ayant au moins un autre qualité, et
- un passage exécuté à une autre variante TD ayant au moins une autre qualité.

8. Procédé selon l'une quelconque des revendications précédentes, **caractérisé en ce que** le système TD comprend au moins une variante TD comportant une transmission de données par l'intermédiaire d'un réseau à commutation de paquets et au moins une variante TD comportant une transmission de données par l'intermédiaire d'un réseau commuté.

9. Procédé selon l'une quelconque des revendications précédentes, **caractérisé en ce qu'**un processus de communication est généré par la transmission de données, et **en ce que** le signal d'état est fusionné sous forme de signal acoustique au processus de communication courant.

10. Procédé selon la revendication 9, **caractérisé en ce que** le signal d'état acoustique n'est audible que de l'utilisateur du système TD ayant lancé le processus de communication courant.

11. Procédé selon la revendication 9 ou 10, **caractérisé en ce que** le signal d'état acoustique est sous la forme d'une annonce vocale fusionnée au processus de communication courant et comportant des informations d'état.

12. Procédé selon la revendication 11, **caractérisé en ce que** le signal d'état acoustique est intégré sous la forme d'une annonce vocale à un système de commande vocale dont dispose l'utilisateur, en particulier dans un système de réponse vocale interactive.

13. Procédé selon l'une quelconque des revendications précédentes, **caractérisé en ce que** le signal d'état est présenté sur un terminal (T, C, G) du système TD sous la forme d'un signal optique.

14. Procédé selon la revendication 13, **caractérisé en ce que** le signal optique est affiché sur un afficheur (D) d'un téléphone numérique ou analogique (T) ou sur l'écran d'un ordinateur (C).

15. Procédé selon l'une quelconque des revendications précédentes, **caractérisé en ce que** le signal d'état optique et/ou acoustique contient des informations concernant le coût courant occasionné par unité de temps, le coût cumulé et/ou d'autres paramètres de qualité de la variante TD en cours d'utilisation et/ou d'au moins une variante TD disponible.

16. Dispositif (T, C, G) destiné à mettre en oeuvre un procédé selon l'une quelconque des revendications 1 à 15, comprenant :
- au moins une interface (I) destinée à intégrer le dispositif (T, C, G) à un système TD qui comprend différentes combinaisons possibles de sections de transmission de données (variantes TD) pour réaliser un processus de communication entre deux systèmes terminaux, une variante TD comprenant plusieurs sections de transmission de données qui sont connectées l'une derrière l'autre et/ou en parallèle, et
- des moyens (S, D, A) destinés à présenter au moins un signal d'état acoustique et/ou optique qui présente des informations concernant l'état d'une variante TD en cours d'utilisation et/ou concernant l'état d'au moins une autre variante TD disponible, dans lequel la variante TD en cours d'utilisation connecte les deux systèmes terminaux afin d'établir entre ceux-ci un processus de communication courant et une variante TD disponible peut connecter les deux systèmes terminaux afin d'établir entre ceux-ci un futur processus de communication potentiel.

17. Dispositif selon la revendication 16, **caractérisé en ce que** le dispositif comporte des moyens (S) destinés à générer au moins un signal de demande.

18. Dispositif selon la revendication 17, **caractérisé en ce que** les moyens (S) sont conçus pour générer le signal de demande de manière à ce qu'ils puissent être activés par un utilisateur du système TD au moyen d'un matériel et/ou d'un logiciel d'un terminal du système TD.

19. Dispositif selon l'une quelconque des revendications 16 à 18, **caractérisé en ce que** le dispositif comporte des moyens destinés à détecter et à présenter un signal de demande de manière perceptible par l'être humain.

20. Dispositif selon l'une quelconque des revendications 16 à 19, **caractérisé en ce qu'**il comprend des moyens destinés à déterminer l'état de la variante TD en cours d'utilisation et/ou d'au moins une variante TD disponible.

21. Dispositif selon l'une quelconque des revendications 16 à 20, **caractérisé en ce que** les moyens destinés à générer au moins un signal d'état acoustique et/ou optique qui représente l'état des variantes TD en cours d'utilisation pour la transmission de données et/ou de variantes TD disponibles, sont conçus de manière à ce que le signal d'état puisse être affiché optiquement sur un dispositif d'affichage d'un système terminal et/ou être perçu acoustiquement par son utilisateur.

22. Dispositif selon l'une quelconque des revendications 16 à 21, **caractérisé en ce que** le dispositif (T, C, G) est conçu de manière à ce que la présentation du signal d'état puisse être inhibée par l'utilisateur du système TD.

23. Téléphone analogique ou numérique comprenant un dispositif selon l'une quelconque des revendications 16 à 22.

24. Ordinateur comprenant un dispositif selon l'une quelconque des revendications 16 à 22.
